# EUROPEAN PATENT SPECIFICATION

(11) **EP 1 607 170 B1**
(45) Date of publication and mention of the grant of the patent: **25.02.2009**
(21) Application number: 04253568.2
(22) Date of filing: 15.06.2004
(51) Int. Cl.: B23P 15/26, F28D 15/02

(54) **Heat pipe having an elastic sealing member and method for producing the same**
Wärmerohr mit elastischen Dichtungselement und Verfahren zu dessen Herstellung
Caloduc avec élement d'étanchéité élastique et son procédé de fabrication

(43) Date of publication of application: 21.12.2005
(73) Proprietor: Orra Corporation, Santa Clara, CA 95054 (US)
(72) Inventor: Luo, Chin-Kuang, Chung Dist., Taichung City (TW); Kuo, Chin-Liang, Ping-Tung City (TW)
(74) Representative: Albutt, Anthony John

(56) References cited:
- PATENT ABSTRACTS OF JAPAN vol. 0071, no. 99 (M-240), 3 September 1983 (1983-09-03) -& JP 58 099689 A (SUMIKIN KOUZAI KOGYO KK), 14 June 1983 (1983-06-14)
- PATENT ABSTRACTS OF JAPAN vol. 0082, no. 27 (M-332), 18 October 1984 (1984-10-18) -& JP 59 109781 A (SUMIKIN KOUZAI KOGYO KK), 25 June 1984 (1984-06-25)
- DATABASE WPI Section Ch, Week 197601 Derwent Publications Ltd., London, GB; Class J08, AN 1976-01441X XP002300231 -& SU 465 527 A (BELYAVSKII L B) 23 June 1975 (1975-06-23)
- PATENT ABSTRACTS OF JAPAN vol. 0051, no. 58 (M-091), 12 October 1981 (1981-10-12) -& JP 56 085691 A (FURUKAWA ELECTRIC CO LTD:THE), 11 July 1981 (1981-07-11)
- PATENT ABSTRACTS OF JAPAN vol. 0110, no. 50 (M-562), 17 February 1987 (1987-02-17) -& JP 61 213599 A (SHOWA ALUM CORP), 22 September 1986 (1986-09-22)
- CAO Y ET AL: "Fabrication and test of a filling station for micro/miniature devices" IECEC '97. PROCEEDINGS OF THE 32ND INTERSOCIETY ENERGY CONVERSION ENGINEERING CONFERENCE. ENERGY SYSTEMS, RENEWABLE ENERGY RESOURCES, ENVIRONMENTAL IMPACT AND POLICY IMPACTS ON ENERGY. HONOLULU, HI, JULY 27 - AUG. 1, 1997, INTERSOCIETY ENERGY CONVERS, vol. VOL. 3 & 4, 27 July 1997 (1997-07-27), pages 1509-1513, XP010269111 ISBN: 0-7803-4515-0

## Description

The invention relates to a heat pipe, more particularly to a heat pipe having an elastic sealing member and to the method for producing the same.

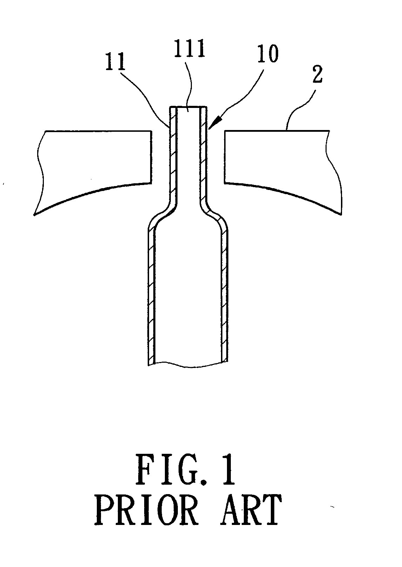

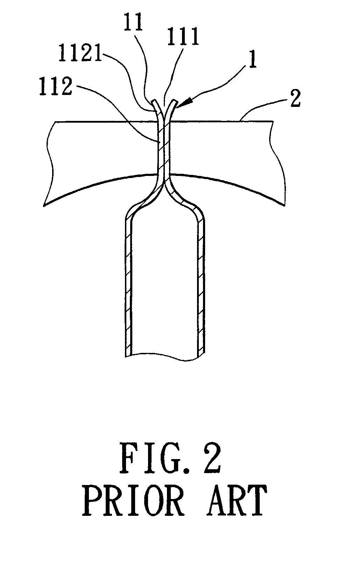

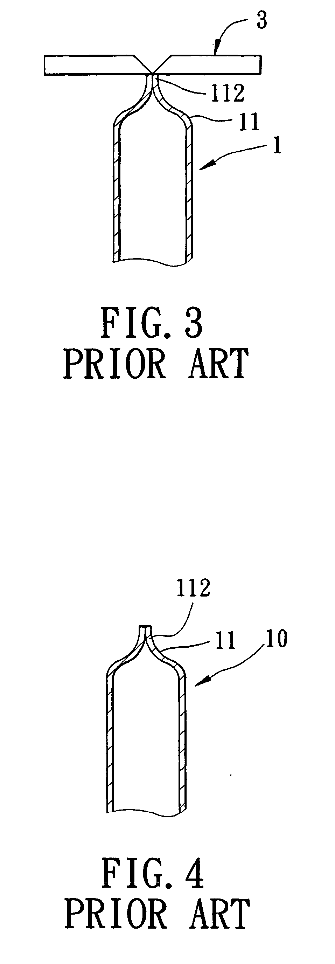

Referring to Figures 1 to 4, a method for producing a conventional heat pipe 1 includes the steps of providing a metallic hollow body 11 with an open end portion 111 and an inner chamber, pouring a suitable amount of heat transfer liquid into the hollow body 11, and evacuating and sealing the hollow body 11. The sealing process of the conventional heat pipe 1 includes the following steps:
(A) Pinching the open end portion 111 of the hollow body 11 by means of a machine tool 2 so as to close the open end portion 111 and so as to form a flattened sealing portion 112;
(B) Cutting a top end portion 1121 of the flattened sealing portion 112 by means of a cutting machine 3; and
(C) Sealing the heat pipe 1 by a spot welding process.

However, in actual use, the aforementioned flattened sealing portion 112 of the heat pipe 1 is easily broken due to an external force, thereby resulting in leakage of the heat pipe 1. Furthermore, the flattened sealing portion 112 increases the length of the heat pipe 1 so that the latter has a relatively large volume. Moreover, since the liquid is first poured into the hollow body 11 followed by the evacuation process, it is possible that some of the liquid will be drawn out such that the quantity of the liquid in the hollow body 11 and the quality of the heat pipe 1 cannot be accurately controlled. Additionally, the method for producing the conventional heat pipe 1 is somewhat complicated.

Patent Abstracts of Japan vol. 0071, no. 99 (M-240), 3 September 1983 & JP 58099689A (Sumikin Kouzai Kogyo KK), 14 June 1983, discloses a heat pipe having a plug made of a highly elastic material press fitted to an open end side of a main body of the heat pipe. A syringe needle is pierced through the plug so that a tip hole thereof reaches an interior space of the main body. Then an injector for the working fluid is connected to the rear end of the needle through a flexible pressure-resistant hose or the like, and the atmosphere in the space is replaced. The document discloses the features of the preambles of the independent claims of the present application.

Database WPI Section Ch, week 197601, Derwent Publications Ltd, London, GB; Class J08, AN 1976-01441X XP002300231 & SU456527A (BELYAVSKII L B) 23 June 1975, discloses a filling end of a pipe provided with an elastic plug. The pipe is evacuated and filled by puncturing the plug with a hollow needle, e.g., a syringe. The filling end is made gas tight at the end of the filling process by compressing the pipe, cold welding and subsequent removal of the pipe section containing the elastic plug.

Therefore, an object of the present invention is to provide a heat pipe having an elastic sealing member and to the method for producing the heat pipe in order to overcome the aforementioned drawbacks of the prior art.

According to one aspect of this invention, a method for producing a heat pipe comprises the steps of: providing a tubular body having a fluid filling end; covering the fluid filling end of the tubular body with an elastic sealing member; piercing the elastic sealing member with a needle; extending the needle through the elastic sealing member and into the tubular body; drawing out air from within the tubular body through the needle; and introducing a heat transfer fluid into the tubular body through the needle. The elastic sealing member provides a passage for the needle when the elastic sealing member is pierced, and contracts to seal the passage after the needle is removed from the elastic sealing member. Further steps of the method include contracting the fluid filling end of the tubular body to form a converging end, which defines a needle hole, and providing a constricted part around the tubular body near but spaced apart from the converging end. The elastic sealing member is retained between the converging end and the constricted part.

According to another aspect of this invention, a heat pipe comprises a tubular body having a fluid filling end provided with a needle hole, an elastic sealing member covering the needle hole, and a heat transfer fluid provided in the tubular body. The elastic sealing member is pierceable to provide a passage, and is contractible to seal the passage. The fluid filling end of the tubular body is formed as a converging end which defines the needle hole. The tubular body further includes a constricted part extending around the tubular body, near the converging end but spaced apart from the converging end. The elastic sealing member is retained between the converging end and the constricted part.

Other features and advantages of the present invention will become apparent in the following detailed description of the preferred embodiments with reference to the accompanying drawings, of which:
Figure 1 is a fragmentary sectional view of a conventional heat pipe prior to pinching of an open end portion by a machine tool;
Figure 2 is another fragmentary sectional view of the conventional heat pipe, illustrating the pinching of the open end portion of the heat pipe by the machine tool to form a flattened sealing portion;
Figure 3 is yet another fragmentary sectional view of the conventional heat pipe, illustrating a top end portion of the flattened sealing portion which has been cut by a cutting machine;
Figure 4 is a further fragmentary sectional view of the conventional heat pipe, illustrating that the heat pipe has been sealed by a spot welding process;
Figure 5 is a fragmentary sectional view of the first preferred embodiment of a heat pipe according to the present invention;
Figure 6 is a fragmentary sectional view to illustrate how a needle that is connected to a controlling unit draws out air from within a tubular body of the heat pipe of the first preferred embodiment;
Figure 7 is a fragmentary sectional view to illustrate the tubular body of the heat pipe of the first preferred embodiment when sealed;
Figure 8 is a sectional view to illustrate how the second preferred embodiment of a heat pipe according to the present invention is produced;
Figure 9 is a sectional view to illustrate the tubular body of Figure 8 when sealed;
Figure 10 is a fragmentary sectional view of a heat pipe; and
Figure 11 is a fragmentary sectional view, illustrating a tubular body of the heat pipe of Figure 10 when sealed.

Before the present invention is described in greater detail, it should be noted that like elements are denoted by the same reference numerals throughout the disclosure.

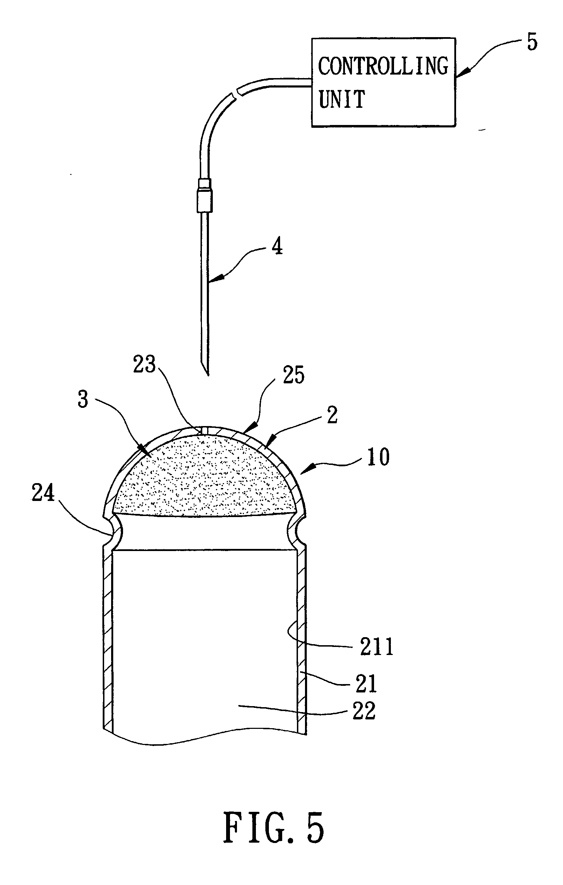

Referring to Figures 5, 6 and 7, the first preferred embodiment of a heat pipe 10 according to the present invention is shown to comprise a tubular body 2, an elastic sealing member 3, and a suitable amount of a heat transfer fluid 20 provided in the tubular body 2.

The tubular body 2 has a peripheral wall 21 with an inner surface 211 defining an inner chamber 22, a fluid filling end 25 formed as a converging end, which defines a needle hole 23, and a constricted part 24 extending around the tubular body 2 and disposed near but spaced apart from the converging end. The needle hole 23 is in fluid communication with the inner chamber 22.

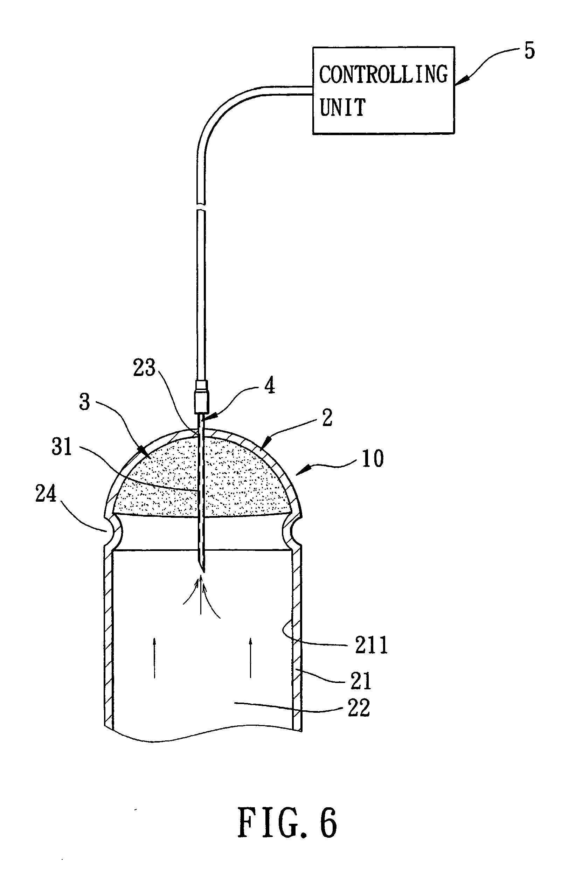

The elastic sealing member 3 covers the needle hole 23 in the fluid filling end 25 of the tubular body 2, and is made of an elastic material, such as a rubber or a silicone elastomer. In this embodiment, the elastic sealing member 3 is provided by introducing a curable resin into the tubular body 2 through the needle hole 23. After the resin is cured, the sealing member 3 is formed and retained sealingly between the converging end and the constricted part 24 of the tubular body 2. The sealing member 3 is pierceable to provide a passage 31 (see Figure 6), and is contractible to seal the passage 31. It should be noted that the sealing member 3 adheres more sealingly to the inner surface 211 of the tubular body 2 due to the presence of the constricted part 24 of the tubular body 2.

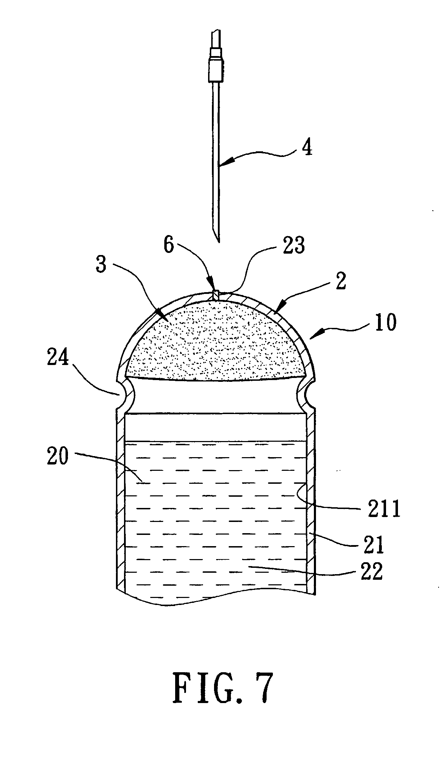

To fill the tubular body 2 with the heat transfer fluid 20, a needle 4 is inserted into the inner chamber 22 of the tubular body 2 by passing through the needle hole 23 and piercing through the sealing member 3. The needle 4 is connected to a controlling unit 5, which operates to subsequently evacuate air from within the inner chamber 22 and to introduce a predetermined amount of the heat transfer fluid 20 (see Figure 7) into the inner chamber 22. Since the operating principle of the controlling unit 5 is known in the art, and is not pertinent to the claimed invention, a detailed description of the same will be dispensed with herein for the sake of brevity. When the needle 4 is withdrawn from the tubular body 2, the sealing member 3, because of its elasticity, contracts to seal the passage 31, and the needle hole 23 is finally closed by a welding process so that air cannot enter the inner chamber 22 of the tubular body 2.

Unlike the aforementioned conventional heat pipe 1, the heat pipe 10 of the present invention does not have to undergo the processes of pinching and cutting prior to sealing. Furthermore, the heat pipe 10 of the present invention has an outer appearance that is not easily broken by an external force, and a length that is shorter than that of the conventional heat pipe 1 so that it does not occupy a relatively large space. Moreover, the amount of the heat transfer fluid 20 filled in the tubular body 2 can be controlled accurately using simple processing equipment so that working quality of the heat pipe 10 of the present invention can be effectively ensured.

It should be further noted that when the needle 4 is withdrawn from the sealing member 3, the needle hole 23 in the tubular body 2 can be closed by a spot welding process or by a solder pot process to effect better airtight sealing. A welding spot, represented by numeral 6, is shown in Figure 7.

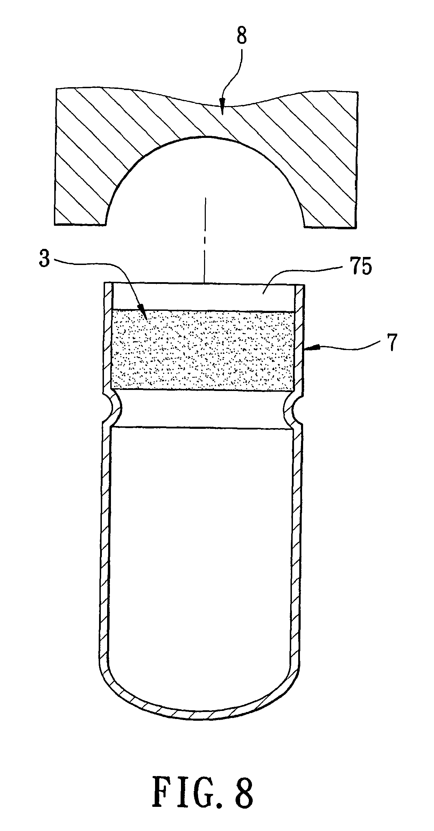

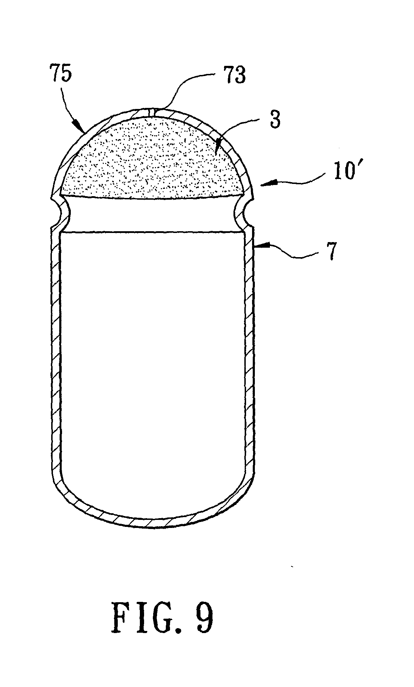

Referring to Figures 8 and 9, the second preferred embodiment of the heat pipe 10' according to the present invention is shown to be substantially similar to the first preferred embodiment. However, in this embodiment, the elastic sealing member 3 is a cured sealing block which is fitted within a fluid filling end 75 of a tubular body 7 before the fluid filling end 75 is contracted by a pipe contracting machine 8 to form the converging end, which defines the needle hole 73.

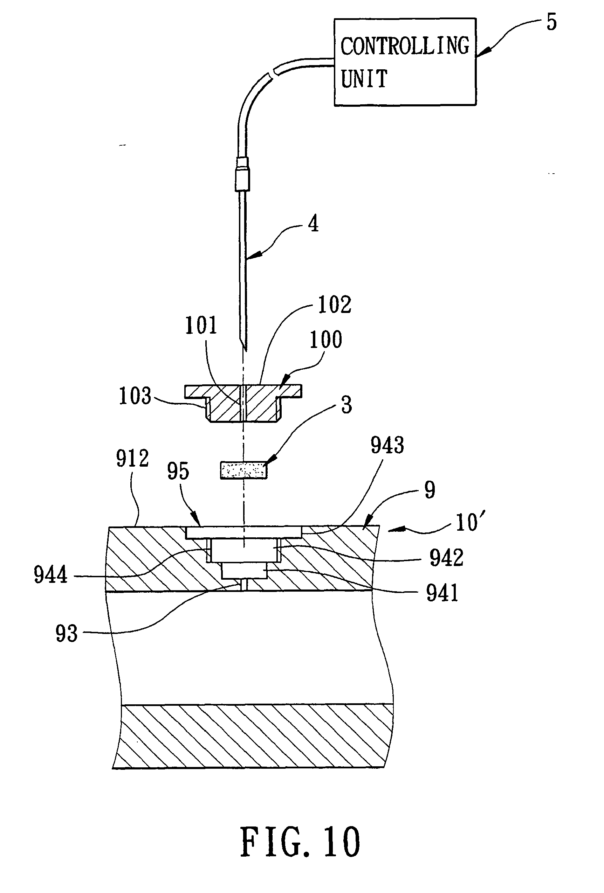

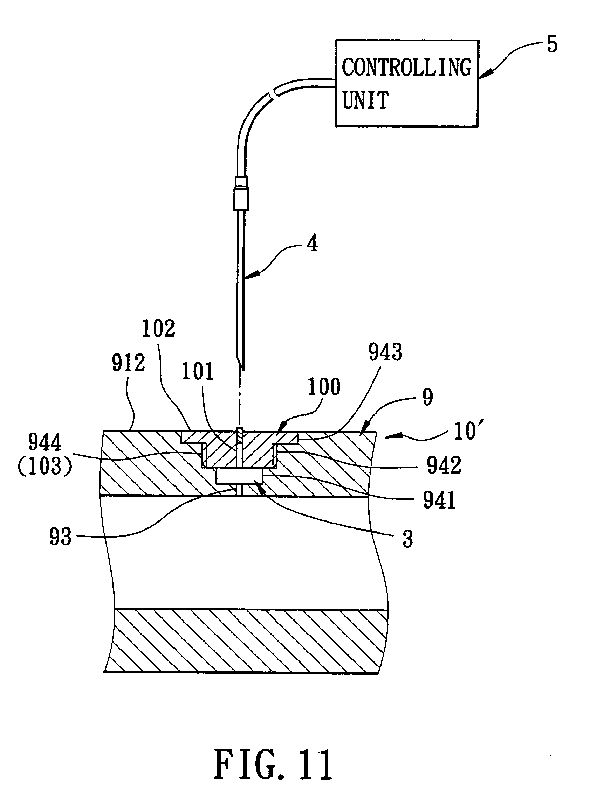

Referring to Figures 10 and 11, a heat pipe 10" not forming part of the present invention is shown. The heat pipe 10" further comprises a positioning member 100 to press the elastic sealing member 3 against the needle hole 93. The tubular body 9 includes a planar top surface 912 formed with a fluid filling end 95. The fluid filling end 95 includes a receiving hole 941 and apositioninghole 942. The receivinghole 941 is disposed outwardly of and is communicated with the needle hole 93 to receive fittingly the elastic sealing member 3 therein, and has a cross-section greater than that of the needle hole 93. The positioning hole 942 is disposed outwardly of and is communicated with the receiving hole 941 to receive the positioning member 100 therein, and has a cross-section greater than that of the receiving hole 941. The positioning hole 942 includes an enlarged part 943, and a threaded part 944 opposite to the enlarged part 943. In this embodiment, the positioning member 100 has a flanged end part 102, and an externally threaded part 103 that is opposite to the flanged end part 102 and that is connected threadedly to the threaded part 944 of the positioning hole 942 when the positioning member 100 is mounted in the positioning hole 942. A processing machine tool (not shown) can be used alternatively to press fit the positioning member 100 into the positioning hole 942. The positioning member 100 further has a through hole 101 for extension of the needle 4 therethrough.

After the positioning member 100 is engaged threadedly to the positioning hole 942 in the tubular body 9, the positioning member 100 presses against the sealing member 3 so that the sealing member 3 is fitted tightly within the receiving hole 941. At this time, the flanged end part 102 of the positioning member 100 is flush with the top surface 912 of the tubular body 9. Finally, the through hole 101 in thepositioningmember 100 is sealed.

Therefore, the method for producing the heat pipe 10 of the present invention includes the following steps.

First of all, the tubular body 2 having the fluid fillingend25 is provided. Thereafter, the fluid filling end 25 of the tubular body 2 is contracted to form the converging end, which defines the needle hole 23. The tubular body 2 is also provided with the constricted part 24 that extends around the tubular body 2 near but spaced-apart from the converging end.

Afterwards, the fluid filling end 25 of the tubular body 2 is covered with the elastic sealing member 2. The sealing member 3 is provided by introducing a curable resin into the tubular body 2 through the needle hole 23, and by curing and forming the curable resin between the converging end and the constricted part 24. Alternatively, the elastic sealing member 3 can be a cured sealing block that is first fitted within the fluid filling end 75 of the tubular body 7, after which the fluid filling end 75 is contracted to form the converging end that defines the needle hole 73. The constricted part 24 of the tubular body 2 pushes the sealing member 3 to abut sealingly against an inner surface of the tubular body 2.

Then, the elastic sealing member 3 is pierced with the needle 4, which extends through the sealing member 3 and into the tubular body 2.

Subsequently, air is drawn out from within the tubular body 2 through the needle 4, and a predetermined amount of the heat transfer fluid 20 is introduced into the tubular body 2 through the needle 4. Then, the needle 4 is withdrawn from the sealing member 3, and the sealing member 3 contracts to seal the passage 31. Afterwards, the needle hole 23 in the tubular body 2 is closed by a spot welding process or by a solder pot process to effect better airtight sealing of the heat pipe 10.

## Claims

1. A method for producing a heat pipe, comprising the steps of:
providing a tubular body (2, 7) having a fluid filling end (25, 75);
covering said fluid filling end (25, 75) of said tubular body with an elastic sealing member (3);
piercing said elastic sealing member with a needle (4) ;
extending the needle through said elastic sealing member and into said tubular body;
drawing out air from within said tubular body through the needle; and
introducing a heat transfer fluid (20) into said tubular body through the needle;
wherein said elastic sealing member provides a passage (31) for the needle when said elastic sealing member is pierced and contracts to seal said passage after the needle is removed from said elastic sealing member; and said method being **characterised by**
contracting said fluid filling end of said tubular body to form a converging end, which defines a needle hole (23, 73), and providing a constricted, part (24) around said tubular body near but spaced apart from said converging end, wherein said elastic sealing member is retained between said converging end and said constricted part.

2. The method as claimed in Claim 1, **characterized in that** said elastic sealing member is provided by introducing a curable resin into said tubular body through said needle hole, and by curing and forming said curable resin between said converging end and said constricted part.

3. The method as claimed in Claim 2, further **characterized by** closing said needle hole by a welding process.

4. The method as claimed in Claim 3, **characterized in that** said needle hole is closed by a spot welding process.

5. The method as claimed in Claim 3, **characterized in that** said needle hole is closed by a solder pot process.

6. The method as claimed in Claim 1, **characterized in that** said sealing member is a cured sealing block which is fitted within said fluid filling end before said fluid filling end is contracted to form the converging end.

7. A heat pipe comprising:
a tubular body (2, 7) having a fluid filling end (25, 75) provided with a needle hole (23, 73);
an elastic sealing member (3) covering said needle hole; and
a heat transfer fluid (20) provided in said tubular body;
wherein said elastic sealing member is pierceable to provide a passage (31) and is contractible to seal said passage; **characterised in that**
said fluid filling end of said tubular body is formed as a converging end which defines said needle hole, said tubular body further including a constricted part (24) extending around said tubular body near said converging end but spaced apart from said converging end, wherein said elastic sealing member is retained between said converging end and said constricted part.

8. The heat pipe as claimed in Claim 7, further **characterized in that** said elastic sealing member is provided by introducing a curable resin into said tubular body through said needle hole, and by curing and forming said curable resin between said converging end and said constricted part.

9. The heat pipe as claimed in Claim 8, further **characterized in that** said needle hole is closed by a welding process.

10. The heat pipe as claimed in Claim 9, further **characterized in that** said needle hole is closed by a spot welding process.

11. The heat pipe as claimed in Claim 9, **characterized in that** said needle hole is closed by a solder pot process.

12. The heat pipe as claimed in Claim 7, **characterized in that** said sealing member is a cured sealing block which is fitted within said fluid filling end before said fluid filling end is contracted to form said converging end.

## Patentansprüche

1. Verfahren zur Herstellung eines Wärmerohres mit folgenden Schritten:
Vorsehen eines rohrförmigen Körpers (2, 7) mit einem Fluidfüllende (25, 75);
Abdecken des Fluidfüllendes (25, 75) des rohrförmigen Körpers mit einem elastischen Dichtelement (3);
Durchstoßen des elastischen Dichtelementes mit einer Nadel (4);
Verlängern der Nadel durch das elastische Dichtelement und in den rohrförmigen Körper hinein;
Herausziehen von Luft aus dem Inneren des rohrförmigen Körpers durch die Nadel; und
Einführen eines Wärmeübertragungsfluids (20) in den rohrförmigen Körper durch die Nadel;
wobei das elastische Dichtelement einen Durchgang (31) für die Nadel vorsieht, wenn es durchstoßen wird und sich zusammenzieht, um den Durchgang abzudichten, nachdem die Nadel aus dem elastischen Dichtelement entfernt ist; wobei das Verfahren **gekennzeichnet ist durch**
Zusammenziehen des Fluidfüllendes des rohrförmigen Körpers zu Bildung eines konvergierenden Endes, welches ein Nadelloch (23, 73) bestimmt und einen verengten Teil (24) um den rohrförmigen Körper herum nahe dem konvergierenden Ende vorsieht, aber im Abstand von diesem, wobei das elastische Element zwischen dem konvergierenden Ende und dem verengten Teil gehalten wird.

2. Verfahren nach Anspruch 1, **dadurch gekennzeichnet, dass** das elastische Dichtelement durch Einführen eines aushärtbaren Harzes in den rohrförmigen Körper durch das Nadelloch und durch Aushärten und Formen des aushärtbaren Harzes zwischen dem konvergierenden Ende und dem verengten Teil vorgesehen wird.

3. Verfahren nach Anspruch 2, ferner **gekennzeichnet durch** Verschließen des Nadelloches **durch** einen Schweißprozeß.

4. Verfahren nach Anspruch 3, **dadurch gekennzeichnet, dass** das Nadelloch durch einen Punktschweißprozeß geschlossen wird.

5. Verfahren nach Anspruch 3, **dadurch gekennzeichnet, dass** das Nadelloch durch ein Verfahren mit Lötmittelgefäß geschlossen wird.

6. Verfahren nach Anspruch 1, **dadurch gekennzeichnet, dass** das Dichtelement ein ausgehärteter Dichtblock ist, der in dem Fluidfüllende eingebaut wird, bevor das Fluidfüllende zur Bildung des konvergierenden Endes kontrahiert wird.

7. Wärmerohr mit:
einem rohrförmigen Körper (2, 7) mit einem Fluidfüllende (25, 75), welches mit einem Nadelloch (23, 73) versehen ist;
einem das Nadelloch abdeckenden elastischen Dichtelement (3); und
einem Wärmeübertragungsfluid (20), welches in dem rohrförmigen Körper vorgesehen ist;
wobei das elastische Dichtelement durchstoßbar ist, um einen Durchgang (31) vorzusehen, und kontraktionsfähig ist, um den Durchgang abzudichten; **dadurch gekennzeichnet, dass**
das Fluidfüllende des rohrförmigen Körpers wie ein konvergierendes Ende geformt ist, welches das Nadelloch bestimmt, der rohrförmige Körper ferner einen verengten Teil (24) aufweist, der sich um den rohrförmigen Körper herum nahe dem konvergierenden Ende erstreckt, aber im Abstand von dem konvergierenden Ende, wobei das elastische Dichtelement zwischen dem konvergierenden Ende und dem verengten Teil gehalten ist.

8. Wärmerohr nach Anspruch 7, ferner **dadurch gekennzeichnet, dass** das elastische Dichtelement durch Einführen eines aushärtbaren Harzes in den rohrförmigen Körper durch das Nadelloch vorgesehen ist sowie durch Aushärten und Formen des aushärtbaren Harzes zwischen dem konvergierenden Ende und dem verengten Teil.

9. Wärmerohr nach Anspruch 8, ferner **dadurch gekennzeichnet, dass** das Nadelloch durch einen Schweißprozeß geschlossen wird.

10. Wärmerohr nach Anspruch 9, ferner **dadurch gekennzeichnet, dass** das Nadelloch durch einen Punktschweißprozeß geschlossen ist.

11. Wärmerohr nach Anspruch 9, **dadurch gekennzeichnet, dass** das Nadelloch durch ein Verfahren mit Lötmittelgefäß verschlossen ist.

12. Wärmerohr nach Anspruch 7, **dadurch gekennzeichnet, dass** das Dichtelement ein ausgehärteter Dichtblock ist, der in dem Fluidfüllende eingebaut ist, bevor das Fluidfüllende kontrahiert ist, um das konvergierende Ende zu bilden.

## Revendications

1. Procédé de production d'un caloduc, comprenant les étapes qui consistent :
à utiliser un corps tubulaire (2, 7) ayant une extrémité (25, 75) de remplissage de fluide ;
à recouvrir ladite extrémité (25, 75) de remplissage de fluide dudit corps tubulaire avec un élément élastique (3) d'obturation étanche ;
à percer ledit élément élastique d'obturation étanche avec une aiguille (4) ;
à avancer l'aiguille à travers ledit élément élastique d'obturation étanche jusque dans ledit corps tubulaire ;
à extraire de l'air de l'intérieur dudit corps tubulaire à travers l'aiguille ; et
à introduire un fluide (20) de transfert de chaleur dans ledit corps tubulaire en passant par l'aiguille ;
dans lequel ledit élément élastique d'obturation étanche établit un passage (31) pour l'aiguille lorsque ledit élément élastique d'obturation étanche est percé et se contracte pour obturer ledit passage après que l'aiguille a été enlevée dudit élément élastique d'obturation étanche ; et ledit procédé étant **caractérisé par**
la contraction de ladite extrémité de remplissage de fluide dudit corps tubulaire pour former une extrémité convergente, qui définit un trou (23, 73) pour aiguilles, et l'utilisation d'une partie resserrée (24) autour dudit corps tubulaire, à proximité, mais espacée, de ladite extrémité convergente, grâce à quoi ledit élément élastique d'obturation étanche est retenu entre ladite extrémité convergente et ladite partie resserrée.

2. Procédé selon la revendication 1, **caractérisé en ce que** ledit élément élastique d'obturation étanche est produit par l'introduction d'une résine durcissable dans ledit corps tubulaire à travers ledit trou pour aiguilles, et par le durcissement et la formation de ladite résine durcissable entre ladite extrémité convergente et ladite partie resserrée.

3. Procédé selon la revendication 2, **caractérisé en outre par** la fermeture dudit trou pour aiguilles par un processus de soudage.

4. Procédé selon al revendication 3, **caractérisé en ce que** ledit trou pour aiguilles est fermé par un processus de soudage par points.

5. Procédé selon la revendication 3, **caractérisé en ce que** ledit trou pour aiguilles est fermé par un processus à creuset soudure.

6. Procédé selon la revendication 1, **caractérisé en ce que** ledit élément d'obturation étanche est un bloc d'obturation étanche durci qui est ajusté dans ladite extrémité de remplissage de fluide avant que ladite extrémité de remplissage de fluide soit contractée pour former l'extrémité convergente.

7. Caloduc comportant :
un corps tubulaire (2, 7) ayant une extrémité (25, 75) de remplissage de fluide pourvue d'un trou (23, 73) pour aiguilles ;
un élément élastique d'obturation étanche (3) recouvrant ledit trou pour aiguilles ; et
un fluide (20) de transfert de chaleur situé dans ledit corps tubulaire ;
dans lequel ledit élément élastique d'obturation étanche peut être percé pour former un passage (31) et peut être contracté pour obturer ledit passage ;
**caractérisé en ce que**
ladite extrémité de remplissage de fluide dudit corps tubulaire est réalisée sous la forme d'une extrémité convergente qui définit ledit trou pour aiguilles, ledit corps tubulaire comprenant en outre une partie resserrée (24) s'étendant autour dudit corps tubulaire à proximité de ladite extrémité convergente, mais espacée de ladite extrémité convergente, grâce à quoi ledit élément élastique d'obturation étanche est retenu entre ladite extrémité convergente et ladite partie resserrée.

8. Caloduc selon la revendication 7, **caractérisé en outre en ce que** ledit élément élastique d'obturation étanche est produit par l'introduction d'une résine durcissable dans ledit corps tubulaire à travers ledit trou pour aiguilles, et par le durcissement et la formation de ladite résine durcissable entre ladite extrémité convergente et ladite partie resserrée.

9. Caloduc selon la revendication 8, **caractérisé en outre en ce que** ledit trou pour aiguilles est formé par un processus de soudage.

10. Caloduc selon la revendication 9, **caractérisé en outre en ce que** ledit trou pour aiguilles est formé par un processus de soudage par points.

11. Caloduc selon la revendication 9, **caractérisé en ce que** ledit trou pour aiguilles est formé par un processus à creuset soudure.

12. Caloduc selon la revendication 7, **caractérisé en ce que** ledit élément d'obturation étanche est un bloc d'obturation étanche durci qui est ajusté dans ladite extrémité de remplissage de fluide avant que ladite extrémité de remplissage de fluide soit contractée pour former ladite extrémité convergente.
